(19) Europäisches Patentamt
European Patent Office
Office européen des brevets

(11) Veröffentlichungsnummer: **0 209 494**
**B1**

(12) **EUROPÄISCHE PATENTSCHRIFT**

(45) Veröffentlichungstag der Patentschrift: **24.01.90**

(51) Int. Cl.$^5$: **D 06 P 1/38**, C 09 B 67/22, C 09 B 67/24// C09B62/095

(21) Anmeldenummer: **86810310.2**

(22) Anmeldetag: **14.07.86**

# (54) Verfahren zum Nuancenstabilen Färben oder Bedrucken.

(30) Priorität: **19.07.85 CH 3143/85**
**23.08.85 CH 3641/85**

(43) Veröffentlichungstag der Anmeldung: **21.01.87 Patentblatt 87/04**

(45) Bekanntmachung des Hinweises auf die Patenterteilung: **24.01.90 Patentblatt 90/04**

(84) Benannte Vertragsstaaten:
**BE CH DE FR GB IT LI NL SE**

(56) Entgegenhaltungen:
**EP-A- 0 044 483**
**EP-A- 0 114 360**
**CH-B- 390 868**
**CH-B- 541 653**
**DD-A- 201 316**
**FR-A- 1 353 723**
**GB-A- 985 481**
**US-A- 3 085 849**
**US-A- 3 354 140**
**US-H- 969 001**
**CHEMICAL ABSTRACTS, Band 101, Nr. 26, Dezember 1984, Seite 61, Zusammenfassung Nr. 231884m, Columbus, Ohio, US; PL-A-123 773 (T. ANDRZEJEWSKI et al.) 31-01-1984**

(73) Patentinhaber: **CIBA-GEIGY AG**
**Klybeckstrasse 141**
**CH-4002 Basel (CH)**

(72) Erfinder: **Sütterlin, Wolfgang**
**Brunnenstrasse 7**
**D-7850 Lörrach-Haagen (DE)**
Erfinder: **Begrich, Rainer, Dr.**
**Habsburgerstrasse 32**
**CH-4310 Rheinfelden (CH)**

**EP 0 209 494 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die vorliegende Erfindung betrifft ein neues Verfahren zum nuancenstabilen Färben oder Bedrucken textiler Fasermaterialien mit grau- bzw. schwarzfärbenden Reaktivfarbstoffen und anschliessender Fixierung.

Textile Fasermaterialien, die mit einem grau- bzw. schwarzfärbenden Reaktivfarbstoff gefärbt oder bedruckt sind, zeigen häufig eine Instabilität der Nuance, d. h. bei ein und demselben Farbstoff kann eine Nuancenabweichung nach rot oder nach gelb bzw. grün auftreten. Diese Nuancenabweichung wird z. B. hauptsächlich beeinflusst vom Fasermaterial und dessen Vorbehandlung, Färbebedingungen, Druckrezeptur und Trocknungs- und Fixierbedingungen. Beeinflussende Faktoren sind z. B.

a) bei der Druckrezeptur : Art des Verdickungsmittels, Alkalimenge, Menge des Oxydationsmittels ;

b) bei der Trocknung : Temperatur, Zeit ;

c) bei der Dämpffixierung : Dampfzustand, Dampfbeschaffenheit, wie Temperatur, Feuchtigkeit, Luftfreiheit, Gehalt an Reduktionsmitteln und Dämpfzeit ;

d) bei der Thermofixierung : Harnstoffmenge, Temperatur, Zeit.

Speziell kritisch wirkt sich diese Nuancenabweichung aus bei mittleren bis hellen Farbtönen im Graubereich und bei modischen Farbtönen, die eine Nuancierkomponente des Graubereichs benötigen.

Aufgabe der vorliegenden Erfindung ist es, ein Verfahren zum nuancenstabilen Färben oder Bedrucken von textilen Fasermaterialien mit grau- bzw. schwarzfärbenden Reaktivfarbstoffen zu finden, welches die vorstehend beschriebenen Nachteile nicht aufweist und den heutigen Anforderungen genügt.

Diese Aufgabe wird dadurch gelöst, dass man anstelle eines grau-bzw. schwarzfärbenden Reaktivfarbstoffes eine Mischung von zwei grau- bzw. schwarzfärbenden Reaktivfarbstoffen appliziert, die sich in ihrer Nuancenabweichung unter identischen Bedingungen gegenläufig verhalten, d. h. ein Farbstoff zeigt die Nuancenabweichung nach rot und unter identischen Bedingungen zeigt der andere Farbstoff die Nuancenabweichung nach gelb bzw. grün.

Gegenstand der vorliegenden Erfindung ist somit ein Verfahren zum nuancenstabilen Färben oder Bedrucken von textilen Fasermaterialien mit grau- bzw. schwarzfärbenden Reaktivfarbstoffen, welches dadurch gekennzeichnet ist, dass man textile Fasermaterialien

A) mit einer Mischung der 1 : 2-Chrom- und 1 : 2-Kobaltkomplexe des Azofarbstoffes der Formel

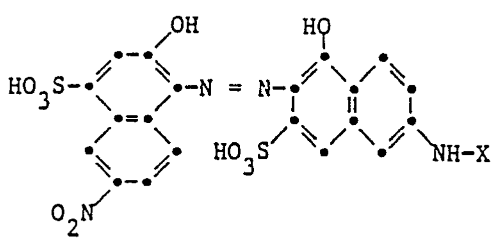

(1)

und mit einer Mischung der 1 : 2-Chrom-und 1 : 2-Kobaltkomplexe des Azofarbstoffes der Formel

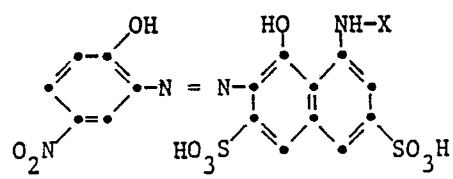

(2)

worin X in den Formeln (1) und (2) einen faserreaktiven Rest bedeutet, oder

B) mit dem 1 : 2-Kobaltkomplex des Azofarbstoffes der Formel (1) und dem 1 : 2-Chromkomplex des Azofarbstoffes der Formel (2), färbt oder bedruckt und anschliessend fixiert.

Ueberraschenderweise werden mit dem erfindungsgemässen Verfahren nuancenstabile Färbungen bzw. Drucke erhalten.

Die Mengen, in denen die definierte Farbstoffmischung in Färbebädern oder Druckpasten verwendet wird, können je nach der gewünschten Farbtiefe in weiten Grenzen schwanken, im allgemeinen haben sich Mengen von 0,01 bis 10 Gewichtsprozent, bezogen auf das Färbegut, bzw. die Druckpaste, als vorteilhaft erwiesen.

Die im erfindungsgemässen Verfahren verwendeten sulfogruppenhaltigen Farbstoffe liegen entweder in Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze

oder das Salz des Triäthanolamins genannt.

X in den Formeln (1) und (2) kann gleich oder verschieden sein.

In den Metallkomplexen der Azofarbstoffe der Formeln (1) bzw. (2) ist das Gewichtsverhältnis von 1 : 2-Chromkomplex zu 1 : 2-Kobaltkomplex insbesondere 80 : 20 bis 60 : 40.

Das Gewichtsverhältnis der Metallkomplexe der Formel (1) zu den Metallkomplexen der Formel (2) ist vorzugsweise 80 : 20 bis 20 : 80 und insbesondere 60 : 40 bis 40 : 60 und vor allem 50 : 50.

Eine bevorzugte Ausführungsform des erfindungsgemässen Verfahrens ist dadurch gekennzeichnet, dass man als eine Mischungskomponente den 1 : 2-Chrom- und 1 : 2-Kobaltkomplex des Azofarbstoffes der Formel (1) und als andere Mischungskomponente den 1 : 2-Chrom- und 1 : 2 Kobaltkomplex des Azofarbstoffes der Formel (2) verwendet.

Eine ebenfalls bevorzugte Ausführungsform des erfindungsgemässen Verfahrens ist dadurch gekennzeichnet, dass man als eine Mischungskomponente den 1 : 2-Chromkomplex des Azofarbstoffes der Formel (2) und als andere Mischungskomponente den 1 : 2-Kobaltkomplex des Azofarbstoffes der Formel (1) verwendet.

Die Azofarbstoffe der Formeln (1) und (2) enthalten vorzugsweise identische Reste X.

Vorzugsweise verwendet man Azofarbstoffe der Formeln (1) und (2), worin X ein identischer 2,5,6-Trichlorpyrimidin-4-yl- oder 2-Chlor-4-(amino-, morpholino-, β-sulfoäthylamino-, p-sulfophenylamino-, o-sulfophenylamino-, N-äthyl, N-phenylamino- oder 2′-(β-chloräthylsulfonyläthoxyäthylamino)-1,3,5-triazin-6-yl-Rest ist. Besonders bevorzugt bedeutet X 2-Chlor-4-amino-1,3,5-triazin-6-yl.

Eine ganz besonders wichtige Ausführungsform des erfindungsgemässen Verfahrens ist somit dadurch gekennzeichnet, dass man als eine Mischungskomponente den 1 : 2-Chrom- und 1 : 2-Kobaltkomplex des Azofarbstoffs der Formel

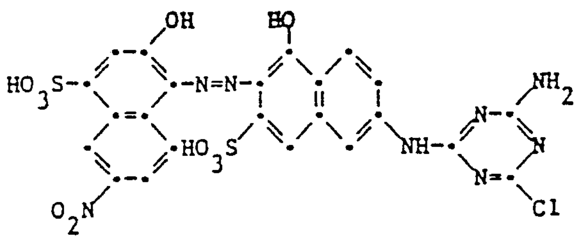

(3)

und als andere Mischungskomponente den 1 : 2-Chrom- und 1 : 2-Kobaltkomplex des Azofarbstoffes der Formel

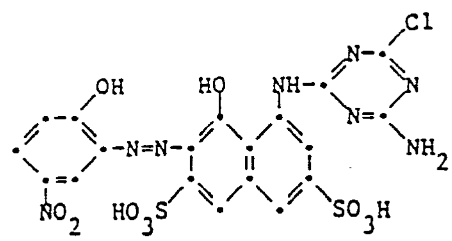

(4)

verwendet.

In den Metallkomplexen der Azofarbstoffe der Formeln (3) bzw. (4) ist das Gewichtsverhältnis von 1 : 2-Chromkomplex zu 1 : 2-Kobaltkomplex insbesondere 80 : 20 bis 60 : 40.

Das Gewichtsverhältnis der Metallkomplexe der Formel (3) zu den Metallkomplexen der Formel (4) ist vorzugsweise 80 : 20 bis 20 : 80 und insbesondere 60 : 40 bis 40 : 60 und vor allem 50 : 50.

Eine ebenfalls ganz besonders wichtige Ausführungsform des erfindungsgemässen Verfahrens ist dadurch gekennzeichnet, dass man als eine Mischungskomponente den 1 : 2-Chromkomplex des Azofarbstoffes der Formel

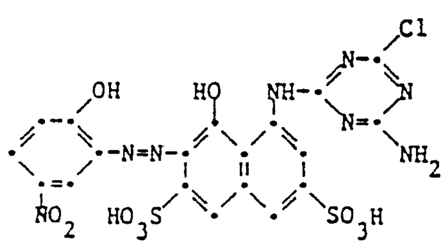

(4)

und als andere Mischungskomponente den 1 :2-Kobaltkomplex des Azofarbstoffes der Formel

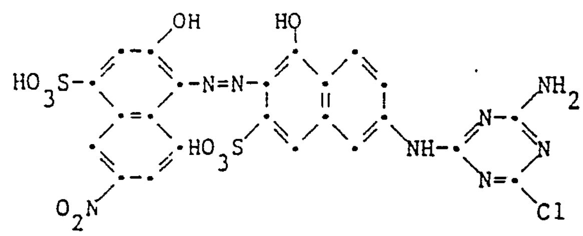

(3)

verwendet.

In dieser Mischung ist das Gewichtsverhältnis von 1 : 2-Chromkomplex zu 1 : 2-Kobaltkomplex 95 : 5 bis 50 : 50 und insbesondere 90 : 10 bis 75 : 25.

Die in dem erfindungsgemässen Verfahren verwendeten sulfogruppenhaltigen 1 : 2-Metallkomplexfarbstoffe sind an sich bekannt und werden nach bekannten Methoden erhalten.

Die in dem erfindungsgemässen Verfahren verwendeten Farbstoffmischungen können z. B. durch Mischung der Einzelfarbstoffe hergestellt werden. Dieser Mischprozess erfolgt beispielsweise in geeigneten Mühlen, z. B. Kugel- oder Stiftmühlen, sowie in Knetern oder Mixern.

Ferner können die Farbstoffmischungen durch Trocknen der wässrigen Farbstofflösungen hergestellt werden, bevorzugt Zerstäubungstrocknen.

Die Färbebäder und Druckpasten können neben dem Farbstoff und den genannten Hilfsmitteln noch weitere übliche Zusätze enthalten.

Besondere Vorrichtungen sind beim erfindungsgemässen Verfahren nicht erforderlich. Es können die üblichen Druck- bzw. Färbeapparate und -maschinen verwendet werden.

Weitere bevorzugte Ausführungsformen des erfindungsgemässen Verfahrens sind dadurch gekennzeichnet, dass man

a) textile Fasermaterialien mit der oben angegebenen Mischung bedruckt,

b) textile Fasermaterialien mit Farbstoffmischungen, enthaltend die oben angegebene Mischung sowie weiter Farbstoffe oder Farbstoffmischungen, färbt oder bedruckt ; insbesondere textile Fasermaterialien aus Mischgeweben mit Farbstoffmischungen, enthaltend mindestens einen Dispersionsfarbstoff, färbt oder bedruckt ; vorzugsweise wird ein Polyester/Cellulose-Mischgewebe verwendet ;

c) Cellulosefasern färbt oder bedruckt.

Als Textilmaterialien kommen natürliche und synthetische Fasern und deren Mischungen in Betracht. Als Beispiele seien genannt: Baumwolle, Leinen, Viscose, Polynosic, Kupfer-Kunstseiden, Wolle, Seide, synthetische Polyamid- und Polyurethanfasern, Wolle/Polyamid-, Wolle/Polyester, Wolle/Cellulose-, Wolle/Polyacrylnitril- und Polyester/Cellulose-Mischgewebe.

Bevorzugt werden Textilmaterialien aus synthetischen Polyamidfasern, Cellulosefasern und Polyester/Cellulose-Mischgewebe verwendet.

Die Textilmaterialien werden nach an sich bekannten Methoden gefärbt oder bedruckt und anschliessend fixiert.

Die Farbstoff-Fixierung auf der Faser erfolgt nach üblichen Verfahren, wobei Fixierzeit und Fixiertemperatur vom Fasermaterial und der Reaktivität der eingesetzten Reaktivfarbstoffe abhängen. Zur Erzielung einer gleichmässigen und optimalen Farbstoff-Fixierung genügen im allgemeinen Dämpfzeiten im Sattdampf zwischen 30 Sekunden und 12 Minuten, insbesondere 2 bis 10 Minuten, bei 90 bis 140 °C, insbesondere 100 bis 105 °C. Durch Hochtemperatur-Dämpfen bzw. Trokkenhitze-Behandlung wird während 20 Sekunden bis 8 Minuten bei 105 bis 220 °C fixiert.

Insbesondere erfolgt die Fixierung der Färbungen oder Drucke in dem erfindungsgemässen Verfahren in Gegenwart von Wasserdampf oder Heissluft, unter Normaldruck und bei einer Temperatur zwischen 90 °C und 220 °C.

Die Fertigstellung der Färbungen oder Drucke erfolgt durch Spülen in heissem und/oder kaltem Wasser und gegebenenfalls anschliessendem Waschen in Gegenwart eines handelsüblichen Waschmittels, nachfolgendem Spülen in Wasser und Trocknen.

Zusammen mit der definierten Mischung schwermetallhaltiger, wasserlöslicher grau- bzw. schwarzfärbender Reaktivfarbstoffe können in Wasser nur wenig lösliche Farbstoffe (Dispersionsfarbstoffe) oder andere wasserlösliche Farbstoffe appliziert werden.

Als geeignete Dispersionsfarbstoffe kommen z. B. die aus dem Colour Index als Disperse Dyes bekannten Farbstoffe in Betracht.

Als geeignete wasserlösliche Farbstoffe die zusammen mit der definierten Mischung schwermetallhaltiger, wasserlöslicher grau- bzw. schwarzfärbender Reaktivfarbstoffe appliziert werden können, und die als wasserlöslichmachende Gruppe z. B. eine oder mehrere Sulfonsäuregruppen enthalten, kommen nicht-reaktive oder faserreaktive Farbstoffe in Betracht, wie z. B. die im Colour Index als Acid-, Direct- und Reactive Dyes bekannten Farbstoffe.

Gegenstand der Erfindung ist ferner die Farbstoffmischung enthaltend

A) den 1 : 2-Chrom-und 1 : 2-Kobaltkomplex des Azofarbstoffes der Formel (1) und den 1 : 2-Chrom- und 1 : 2-Kobaltkomplex des Azofarbstoffes der Formel (2) ; oder

B) den 1 : 2-Kobaltkomplex des Azofarbstoffes der Formel (1) und den 1 : 2-Chromkomplex des Azofarbstoffes der Formel (2).

In den Metallkomplexen der Azofarbstoffe der Formeln (1) bzw. (2) ist das Gewichtsverhältnis von 1 : 2-Chromkomplex zu 1 : 2-Kobaltkomplex insbesondere 80 : 20 bis 60 : 40.

Das Verhältnis der Metallkomplexe der Formel (1) zu den Metallkomplexen der Formel (2) ist vorzugsweise 80 : 20 bis 20 : 80, insbesondere 60 : 40 bis 40 : 60 und vor allem 50 : 50.

Vorzugsweise bedeutet X in den Formeln (1) und (2) den identischen 2,5,6-Trichlorpyrimidin-4-yl- oder 2-Chlor-4-(amino-, morpholino-, β-sulfoäthylamino-, p-sulfophenylamino-, o-sulfophenylamino-, N-äthyl, N-phenylamino- oder 2'-(β-chloräthylsulfonyläthoxy-äthylamino)-1,3,5,-triazin-6-yl-Rest. Besonders bevorzugt ist X 2-Chlor-4-amino-1,3,5-triazin-6-yl.

Ganz besonders wichtig ist somit die Farbstoffmischung, enthaltend den 1 : 2-Chrom- und 1 : 2-Kobaltkomplex des Azofarbstoffes der Formel

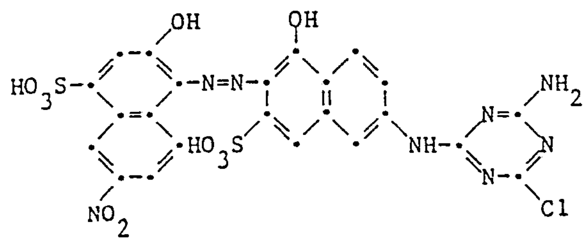

(3)

und den 1 : 2-Chrom-und 1 : 2-Kobaltkomplex des Azofarbstoffes der Formel

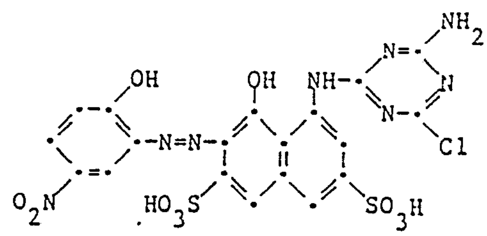

(4)

In den Metallkomplexen der Azofarbstoffe der Formeln (3) bzw. (4) ist das Gewichtsverhältnis von 1 : 2-Chromkomplex zu 1 : 2-Kobaltkomplex insbesondere 80 : 20 bis 60 : 40.

Das Verhältnis der Metallkomplexe der Formel (3) zu den Metallkomplexen der Formel (4) ist vorzugsweise 80 : 20 bis 20 : 80, insbesondere 60 : 40 bis 40 : 60 und vor allem 50 : 50.

Ebenfalls besonders wichtig ist die Farbstoffmischung enthaltend den 1 :2-Chromkomplex des Azofarbstoffes der Formel

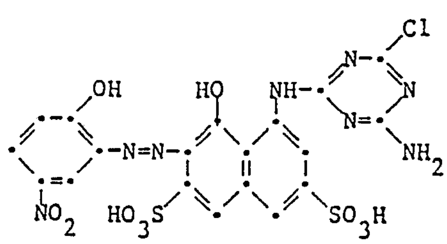

(4)

und den 1 : 2-Kobaltkomplex des Azofarbstoffes der Formel

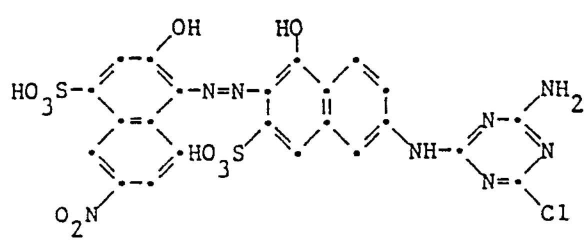

(3)

In dieser Farbstoffmischung ist das Gewichtsverhältnis von 1 : 2-Chromkomplex zu 1 : 2-Kobaltkomplex der Metallkomplexe vorzugsweise 95 : 5 bis 50 : 50 und insbesondere 90 : 10 bis 75 : 25.

Die erfindungsgemässen Farbstoffmischungen können zum Färben oder Bedrucken textiler Fasermaterialien verwendet werden. Als textile Fasermaterialien kommen die vorstehend genannten Materialien in Betracht. Vorzugsweise werden mit den erfindungsgemässen Farbstoffmischungen Cellulosefasern gefärbt oder bedruckt, wobei die üblichen Färbe-, Druck- und Fixierverfahren angewendet werden können.

Interessant ist ferner die Verwendung der erfindungsgemässen Farbstoffmischungen als Komponente in Mischungen mit anderen Farbstoffen, z. B. zur Erzielung gedeckter Farbtöne.

Unter faserreaktiven Resten X sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Vorzugsweise bedeutet X einen faserreaktiven Rest der aliphatischen, aromatischen oder heterocyclischen Reihe, der direkt oder über ein Brückenglied an den Chromophor gebunden ist.

Vorzugsweise ist X direkt oder über eine gegebenenfalls monoalkylierte Aminogruppe wie z. B. —NH—, —$N(CH_3)$—, —$N(C_2H_5)$— oder —$N(C_3H_7)$— oder über ein eine Aminogruppe enthaltendes Brückenglied an den Chromophor gebunden.

Als faserreaktive Reste X kommen z. B. die folgenden aliphatischen und aromatischen Reste in Betracht:

Vinylsulfonyl-, β-Chloräthylsulfonyl-, β-Sulfatoäthylsulfonyl-, Acetoxy-äthylsulfonyl-, Phosphonooxyäthylsulfonyl-, β-Thiosulfatoäthylsulfonyl, N-Methyl-N-(β-sulfatoäthyl-sulfonyl)-amino, Acryloyl, Mono-, Di- oder Trichloracryloyl wie —CO—CCl=$CH_2$, —CO—CH=CH—Cl, —CO—CCl=CH—$CH_3$; Mono-, Di- oder Tribromacryloyl wie —CO—CBr=$CH_2$, —CO—CH=CH—Br, —CO—CBr=CH—$CH_3$; sowie —CO—CCl=CH—COOH —CO—CH=CCl—COOH, —CO—CBr=CH—COOH, —CO—CH=CBr—COOH; —CO—CCl=CCl—COOH, —CO—CBr=CBr—COOH; Vorstufen des Acryloyl-Restes und der Derivate des Acryloyl-Restes wie β-Chlor- oder β-Brompropionyl, 3-Phenylsulfonylpropionyl, 3-Methylsulfonylpropionyl, 3-Chlor-3-phenylsulfonylpropionyl, 2,3-Dichlorpropionyl, 2,3-Dibrompropionyl; sowie 2-Fluor-2-chlor-3,3-difluorcyclobutan-1-carbonyl, 2,2,3,3-Tetrafluorcyclobutan-carbonyl-1-oder sulfonyl-1-, β-(2,2,3,3-Tetrafluorcyclobutyl-1)-acryloyl, α- oder β-Alkenyl- oder Arylsulfonyl-acryloyl-Gruppe wie α- oder β-Methylsulfonylacryloyl, Propiolyl, Chloracetyl, Bromacetyl, 4-(β-Chloräthyl-sulfonyl)-butyryl, 4-Vinylsulfonyl-butyryl, 5-(β-Chloräthyl-sulfonyl)-valeryl, 5-Vinylsulfonyl-valeryl, 6-(β-Chloräthyl-sulfonyl)-caproyl, 6-Vinylsulfonyl-carproyl; sowie 4-Fluor-3-nitro-benzoyl, 4-Fluor-3-nitrophenylsulfonyl, 4-Fluor-3-methylsulfonylbenzoyl, 4-Fluor-3-cyanbenzoyl, 2-Fluor-5-methylsulfonylbenzoyl.

Des weiteren sind faserreaktive Reste X der heterocyclischen Reihe zu nennen, wie z. B. 2,4-Dichlortriazinyl-6-, Mono- Di- oder Trihalogenpyrimidinylreste, wie 2,4-Dichlorpyrimidinyl-6-, 2,4,5-Trichlorpyrimidinyl-6-, 2,4-Dichlor-5-nitro- oder 5-methyl- oder -5-carboxymethyl- oder -5-carboxy- oder -5-cyano- oder -5-vinyl- oder -5-sulfo- oder -5-mono-, -di- oder trichlormethyl- oder 5-methylsulfonylpyrimidinyl-6-, 2,5-Dichlor-4-methylsufonyl-pyrimidinyl-6-, 2-Fluor-4-pyrimidinyl-, 2,6-Difluor-4-pyrimidinyl-, 2,6-Difluor-5-chlor-4-pyrimidinyl-, 2-Fluor-5,6-diohlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder 5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; 2,4-Bis-methylsulfonyl-pyrimidinyl-4-, 2,5-Bis-methylsulfonyl-6-chlor-pyrimidinyl-4-, 2-Methylsulfonyl-pyrimidinyl-4-, 2-Phenylsulfonyl-pyrimidinyl-4-, 2-Methylsulfonyl-5-chlor-6-methylpyrimidinyl-4-, 2-Methylsulfonyl-5-brom-6-methyl-pyrimidinyl-4-, 2-Methylsulfonyl-5-chlor-6-äthyl-pyrimidinyl-4-, 2-Methylsulfonyl-5-chlor-methyl-pyrimidinyl-4-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Aethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxypyrimidinyl-4-, 2-Methylsulfonyl-5-cyan-6-methoxy-pyrimidinyl-4-, 2-Methylsulfonyl-5-chlor-pyrimidinyl-4-, 2-Sulfoäthylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2,4-Dichlorpyrimidin-6-carbonyl oder 6-sulfonyl, 2,4-Dichlorpyrimidin-5-carbonyl- oder 5-sulfonyl, 2-Chlor-4-methylpyrimidin-5-carbonyl,

2-Methyl-4-chlorpyrimidin-5-carbonyl, 2-Methylthio-4-fluorpyrimidin-5-carbonyl, 6-Methyl-2,4-dichlorpyrimidin-5-carbonyl, 2,4,6-Trichlorpyrimidin-5-carbonyl, 2,4-Dichlorpyrimidin-5-sulfonyl, 2,4-Dichlor-6-methyl-pyrimidin-5-carbonyl oder 5-sulfonyl, 2-Methylsulfonyl-6-chlorpyrimidin-4- und 5-carbonyl, 2,6-Bis-(methylsulfonyl)-pyrimidin-4- oder -5-carbonyl, 2-Ethylsulfonyl-6-chlorpyrimidin-5-carbonyl, 2,4-Bis-(methylsulfonyl)-pyrimidin-5-sulfonyl, 2-Methylsulfonyl-4-chlor-6-methylpyrimidin-5-sulfonyl- oder -5-carbonyl, 2-Chlorchinoxalin-3-carbonyl, 2- oder 3-Monochlorchinoxalin-6-carbonyl, 2- oder 3-Monochlorchinoxalin-6-sulfonyl, 2,3-Dichlorchinoxalin-5- oder -6-carbonyl, 2,3-Dichlorchinoxalin-5- oder -6-sulfonyl, 1,4-Dichlorphthalazin-6-sulfonyl- oder -6-carbonyl, 2,4-Dichlorchinazolin-7- oder -6-sulfonyl- oder carbonyl, 2,4,6-Trichlorchinazolin-7- oder -8-sulfonyl, 2- oder 3- oder 4-(4',5'-Dichlorpyridazon-6'-yl-1')-phenylsulfonyl- oder carbonyl, β-(4',5'-Dichlorpyridazinon-6'-yl-1')-propionyl, 3,6-Dichlorpyridazin-4-carbonyl-oder 4-sulfonyl, 2-Chlorbenzthiazol-5- oder 6-carbonyl- oder -5-oder -6-sulfonyl, 2-Arylsulfonyl- oder -Alkylsulfonylbenzthiazol-5-oder -6-carbonyl- oder -5- oder -6-sulfonyl, wie 2-Methylsulfonyl-oder 2-Ethylsulfonylbenzthiazol-5- oder -6-sulfonyl- oder -carbonyl, 2-Phenylsulfonyl-benzthiazol-5- oder -6-sulfonyl- oder carbonyl und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl, 2-Chlorbenzimidazol-5- oder -6-carbonyl- oder -sulfonyl, 2-Chlor-1-methylbenzimidazol-5- oder -6-carbonyl- oder -sulfonyl, 2-Chlor-4-methylthiazol-(1, 3)-5-carbonyl) oder -4- oder -5-sulfonyl ; ammoniumgruppenhaltige Triazinringe, wie 2-Trimethylammonium-4-phenylamino- oder -4-(o-, m- oder p-sulfophenyl)-amino-triazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino-oder -4-(o-, m- oder p-sulfophenyl)-aminotriazinyl-6-, ferner 4-Phenylamino- oder 4-(sulfophenylamino)-triazinyl-6-Reste, die in 2-Stellung über eine Stickstoffbinding das 1,4-Bis-aza-bicyclo[2,2,2]-octan oder das 1,2-Bis-aza-bicyclo-[0,3,3]-octan quartär gebunden enthalten, 2-Pyridinium-4-phenylamino- oder -4-(o-, m- oder p-sulfophenyl)-amino-triazinyl-6- sowie entsprechende 2-Oniumtriazinyl-6-Reste, die in 4-Stellung durch Alkylamino-, wie Methylamino, Aethylamino- oder β-Hydroxy-äthylamino-, oder Alkoxy-, wie Methoxy- oder Aethoxy-, oder Aryloxy-, wie Phenoxy-, oder Sulfophenoxy-Gruppen substituiert sind.

Besonders interessante faserreaktive Reste sind Fluor-1,3,5-triazinreste der Formel

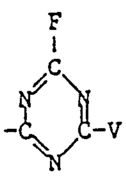

wobei als Substituenten V am Triazinring insbesondere zu nennen sind :

—$NH_2$, Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, und Aminogruppen, worin das Aminostickstoffatom Glied eines N-heterocyclischen Ringes ist, der gegebenenfalls weitere Heteroatome enthält, sowie Hydrazino und Semicarbazido. Die oben genannten Alkylreste können geradkettig oder verzweigt, niedrigmolekular oder höhermolekular sein, bevorzugt sind Alkylreste mit 1 bis 6 Kohlenstoffatomen ; als Cycloalkyl-, Aralkyl- und Arylreste kommen insbesondere Cyclohexyl-, Benzyl-, Phenäthyl-, Phenyl- und Naphthylreste in Frage ; heterocyclische Reste sind vor allem Furan-, Thiophen-, Pyrazol-, Pyridin-, Pyrimidin-, Chinolin-, Benzimidazol-, Benzthiazol- und Benzoxazolreste ; und als Aminogruppen, worin das Aminostickstoffatom Glied eines N-heterocyclischen Ringes ist, kommen vorzugsweise Reste von sechsgliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Resten sowie die N-heterocyclischen Ringe können weitersubstituiert sein, z. B. durch : Halogen, wie Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino oder Benzoylamino, Ureido, Hydroxy, Carboxy, Sulfomethyl oder Sulfo. Als Beispiele für derartige Aminogruppen seien genannt : —$NH_2$, Methylamino, Aethylamino, Propylamino, Isopropylamino, Butylamino, Hexylamino, β-Methoxyäthylamino, γ-Methoxypropylamino, β-Aethoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamino, Cyclohexylamino, Phenylamino, Toluidino, Xylidino, Chloranilino, Anisidino, Phenetidino, N-Methyl-N-phenylamino, N-Aethyl-N-phenylamino, N-β-Hydroxyäthyl-N-phenylamino, 2-, 3- oder 4-Sulfoanilino, 2,5-Disulfoanilino, 4-Sulfomethylanilino, N-Sulfomethylanilino, 2-, 3- oder 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1)-amino, 4,6,8-Trisulfonaphthyl-(1)-amino, 1-Sulfonaphthyl-(2)-amino, 1,5-Disulfonaphthyl-(2)-amino, 6-Sulfonaphthyl-(2)-amino, Morpholino, Piperidino, Piperazino, Hydrazino und Semicarbazido.

Das erfindungsgemässe Verfahren zeichnet sich gegenüber bekannten Verfahren mit schwermetallhaltigen, wasserlöslichen grau- bzw. schwarzfärbenden Reaktivfarbstoffen durch eine deutlich bessere Nuancenstabilität der resultierenden Färbungen bzw. Drucke aus.

Die nachfolgenden Beispiele dienen der Veranschaulichung der Erfindung. Darin sind die Teile Gewichtsteile und die Prozente Gewichtsprozente. Die Temperaturen sind in Celsiusgraden angegeben. Die Beziehung zwischen Gewichtsteilen und Volumenteilen ist diesselbe wie diejenige zwischen Gramm und Kubikzentimeter.

Beispiel 1

Ein Gewebe aus mercerisierter Baumwolle wird mit einer Druckpaste, enthaltend 0,5 g/kg des 1 : 2-Chrom-und 1 : 2-Kobaltkomplexes des Azofarbstoffes der Formel

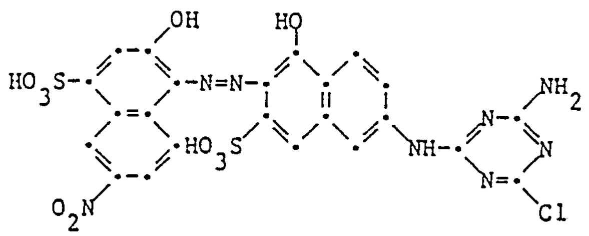

(3)

welcher zu 67 Gewichtsprozent aus dem 1 : 2-Chromkomplex und zu 33 Gewichtsprozent aus dem 1 : 2-Kobaltkomplex des Azofarbstoffes der Formel (3) besteht,

0 5 g/kg des 1 : 2-Chrom- und 1 : 2-Kobaltkomplexes des Azofarbstoffes der Formel

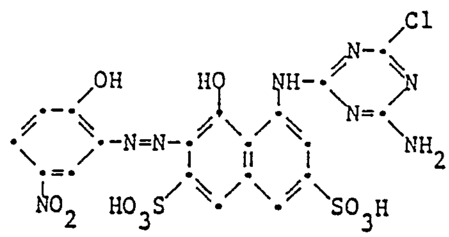

(4)

welcher zu 75 Gewichtsprozent aus dem 1 : 2-Chromkomplex und zu 25 Gewichtsprozent aus dem 1 : 2-Kobaltkomplex des Azofarbstoffes der Formel (4) besteht,

120 g/kg Harnstoff,

8 g/kg m-Nitrobenzolsulfonsäure-Na-Salz,

48 g/kg 25 %-ige $Na_2CO_3$-Lösung,

400 g/kg Na-Alginat-Verdicker und

423 g/kg Weichwasser,

musterförmig bedruckt, bei 100 °C während 3 Minuten getrocknet, anschliessend

a) in einem Dämpfer offener Bauart (Mathis-Dämpfer)

b) in einem Dämpfer geschlossener Bauart (Sterndämpfer)

während 8 Minuten bei 101 bis 102 °C gedämpft, mit kaltem Wasser und dann mit kochendem Wasser gespült bis die nicht-fixierten Anteile der eingesetzten Farbstoffe entfernt sind. Nach Trocknung des bedruckten Gewebes bei 90 bis 100 °C erhält man hellgraue Drucke. Die im Mathis-Dämpfer und die im Sterndämpfer behandelten Gewebe sind nuancengleich.

Vergleichsbeispiel 1

Wenn man wie im Beispiel 1 angegeben verfährt, jedoch anstelle der Mischung der Metallkomplexe der Formeln (3) und (4) 1 g/kg des in Beispiel 1 angegebenen 1 : 2-Chrom- und 1 : 2-Kobaltkomplexes des Azofarbstoffes der Formel (3) verwendet, so erhält man bei sonst gleicher Verfahrensweise hellgraue Drucke, wobei das im Mathis-Dämpfer behandelte Gewebe einen rotstichigen Farbton hat und das im Sterndämpfer behandelte Gewebe einen grünstichigen Farbton hat.

Vergleichsbeispiel 2

Wenn man wie im Beispiel 1 angegeben verfährt, jedoch anstelle der Mischung der Metallkomplexe

der Formeln (3) und (4) 1 g/kg des in Beispiel 1 angegebenen 1 : 2-Chrom- und 1 : 2-Kobaltkomplexes des Azofarbstoffes der Formel (4) verwendet, so erhält man bei sonst gleicher Verfahrensweise hellgraue Drucke, wobei das im Mathis-Dämpfer behandelte Gewebe einen grünstichigen Farbton hat und das im Sterndämpfer behandelte Gewebe einen rotstichigen Farbton hat.

Beispiel 2

Ein Gewebe aus mercerisierter Baumwolle wird mit einer Flotte folgender Zusammensetzung imprägniert :

4,8 g/l des 1 : 2-Chrom- und 1 : 2-Kobaltkomplexes des Azofarbstoffes der Formel (3) gemäss Beispiel 1,

1,2 g/l des 1 : 2-Chrom- und 1 : 2-Kobaltkomplexes des Azofarbstoffes der Formel (4) gemäss Beispiel 1,

200 g/l Harnstoff,

3 g/l m-Nitrobenzolsulfonsäure-Na-Salz

20 g/l kalziniertes $Na_2CO_3$ und

771 g/l Weichwasser.

Das imprägnierte Gewebe wird während 75 Sekunden bei 120 °C getrocknet und dann während 2 Minuten bei 160 °C fixiert. Anschliessend wird das Gewebe auf übliche Art gespült, geseift und getrocknet. Man erhält eine graue gleichmässige Färbung im gleichen Farbton wie die nach dem folgenden Pad-Steam-Verfahren erhaltene Färbung : Ein Gewebe aus mercerisierter Baumwolle wird mit einer Lösung foulardiert, enthaltend :

4,8 g/l des 1 : 2-Chrom und 1 : 2-Kobaltkomplexes des Azofarbstoffes der Formel (3) gemäss Beispiel 1,

1,2 g/l des 1 : 2-Chrom und 1 : 2-Kobaltkomplexes des Azofarbstoffes der Formel (4) gemäss Beispiel 1, und

3 g/l m-Nitrobenzolsulfonsäure-Na-Salz.

Man trocknet bei 120 °C während 75 Sekunden und imprägniert das Gewebe mit einer Flotte enthaltend

250 g/l NaCl und

40 g/l 30 %-ige NaOH.

Die Flüssigkeitsaufnahme des Gewebes beträgt ca. 70 %. Anschliessend wird ohne Zwischentrocknung bei 102 °C während 90 Sekunden gedämpft.

Wenn man anstelle der Mischung der Metallkomplexe die einzelnen Metallkomplexe wie in den Vergleichsbeispielen 1 und 2 einsetzt, so erhält man Färbungen unterschiedlicher Nuancenabweichung, d. h. grünstichige bzw. rotstichige graue Färbungen.

Beispiel 3

Ein Gewebe aus mercerisierter Baumwolle wird mit einer Druckpaste, enthaltend 0,15 g/kg des 1 : 2-Kobaltkomplexes des Azofarbstoffes der Formel

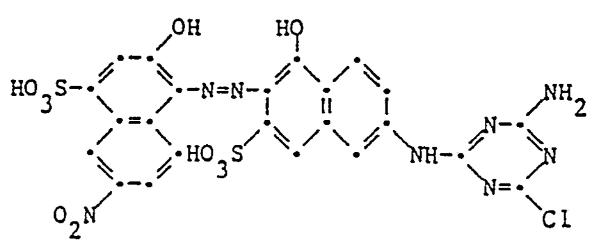

(3)

0,85 g/kg des 1 : 2-Chromkomplexes des Azofarbstoffes der Formel

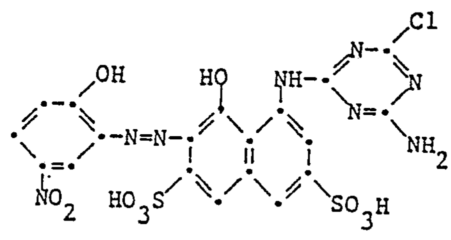

(4)

120 g/kg Harnstoff,

8 g/kg m-Nitrobenzolsulfonsäure-Na-Salz,

48 g/kg 25 %-ige $Na_2CO_3$-Lösung,
400 g/kg Ha-Alginat-Verdicker und
423 g/kg Weichwasser,
musterförmig bedruckt, bei 100 °C während 3 Minuten getrocknet, anschliessend
a) in einem Mathis-Dämpfer
b) in einem Sterndämpfer
während 8 Minuten bei 101 bis 102 °C gedämpft, mit kaltem Wasser und dann mit kochendem Wasser gespült bis die nicht-fixierten Anteile der eingesetzten Farbstoffe entfernt sind. Nach Trocknung des bedruckten Gewebes bei 90 bis 100 °C erhält man hellgraue Drucke. Die im Mathis-Dämpfer und die im Sterndämpfer behandelten Gewebe sind nuancengleich.

Wenn man wie in den Beispielen 1 bis 3 angegeben verfährt, jedoch anstelle der Metallkomplexe der Azofarbstoffe der Formeln (3) und (4) eine äquimolare Menge der entsprechenden Metallkomplexe der Azofarbstoffe der Formeln

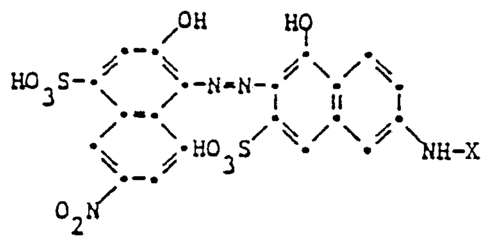

(1)

und

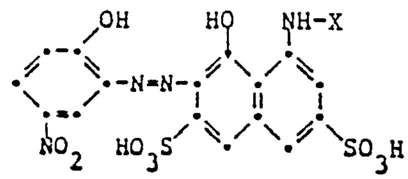

(2)

verwendet, worin X jeweils den identischen Rest wie in der folgenden Tabelle angegeben, bedeutet, so erhält man ebenfalls nuancengleiche graue Färbungen bzw. Drucke.

Tabelle

| Beispiel | X |
|---|---|
| 4 | 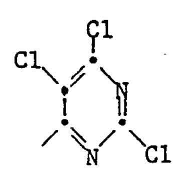 |

(Siehe Tabelle (Fortsetzung) Seite 11 f.)

Tabelle (Fortsetzung)

| Beispiel | X |
|---|---|
| 5 | 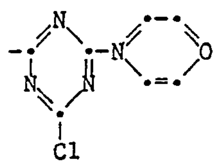 |
| 6 | 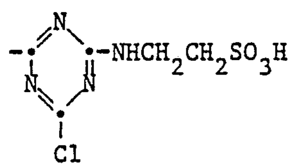 |
| 7 | 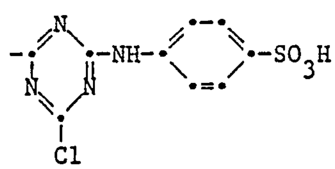 |
| 8 | 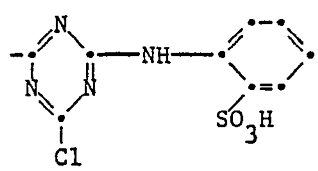 |
| 9 | 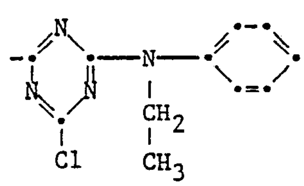 |
| 10 | 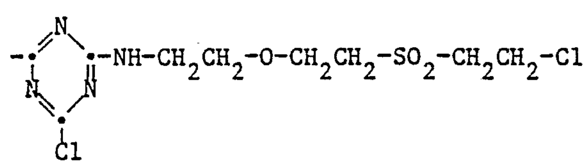 |

**Patentansprüche**

1. Verfahren zum nuancenstabilen Färben oder Bedrucken von textilen Fasermaterialien mit grau- bzw. schwarzfärbenden Reaktivfarbstoffen, dadurch gekennzeichnet, dass man textile Fasermaterialien

A) mit einer Mischung der 1 : 2-Chrom- und 1 : 2-Kobaltkomplexe des Azofarbstoffes der Formel

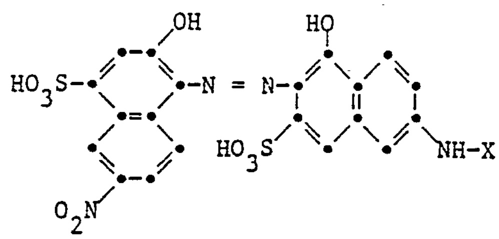

(1)

und mit einer Mischung der 1 : 2-Chrom-und 1 : 2-Kobaltkomplexe des Azofarbstoffes der Formel

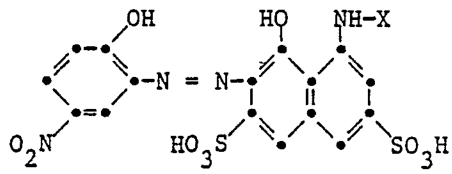

(2)

worin X in den Formeln (1) und (2) einen faserreaktiven Rest bedeutet, oder

B) mit dem 1 : 2-Kobaltkomplex des Azofarbstoffes der Formel (1) und dem 1 : 2-Chromkomplex des Azofarbstoffes der Formel (2), färbt oder bedruckt und anschliessend fixiert.

2. Verfahren gemäss Anspruch 1, dadurch gekennzeichnet, dass man als eine Mischungskomponente den 1 : 2-Chrom- und 1 : 2-Kobaltkomplex des Azofarbstoffes der Formel (1) und als andere Mischungskomponente den 1 : 2-Chrom- und 1 : 2-Kobaltkomplex des Azofarbstoffes der Formel (2) verwendet.

3. Verfahren gemäss Anspruch 1, dadurch gekennzeichnet, dass man als eine Mischungskomponente den 1 : 2-Chromkomplex des Azofarbstoffes der Formel (2) und als andere Mischungskomponente den 1 : 2-Kobaltkomplex des Azofarbstoffes der Formel (1) verwendet.

4. Verfahren gemäss Anspruch 2, dadurch gekennzeichnet, dass man als eine Mischungskomponente den 1 : 2-Chrom- und 1 : 2-Kobaltkomplex des Azofarbstoffes der Formel

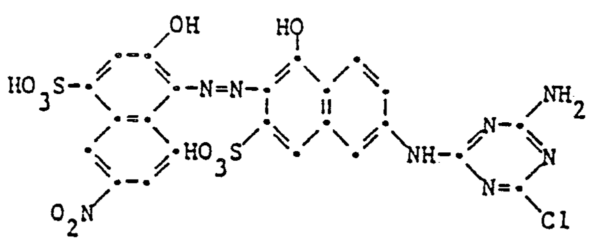

(3)

und als andere Mischungskomponente den 1 : 2-Chrom- und 1 : 2-Kobaltkomplex des Azofarbstoffes der Formel

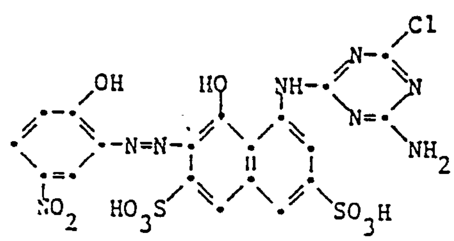

(4)

verwendet.

5. Verfahren gemäss Anspruch 3, dadurch gekennzeichnet, dass man als eine Mischungskomponente den 1 : 2-Chromkomplex des Azofarbstoffes der Formel

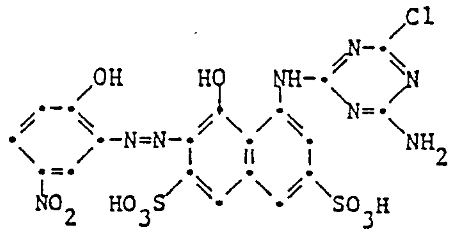

(4)

und als andere Mischungskomponente den 1 : 2-Kobaltkomplex des Azofarbstoffes der Formel

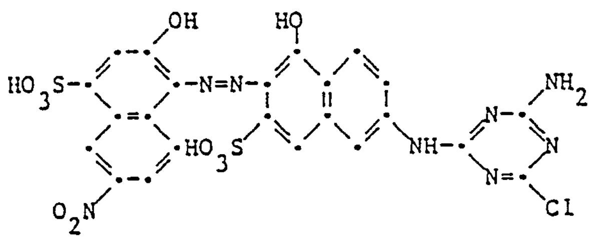

(3)

verwendet.

6. Verfahren gemäss Anspruch 1, dadurch gekennzeichnet, dass man textile Fasermaterialien mit der in Anspruch 1 angegebenen Mischung bedruckt.

7. Verfahren gemäss Anspruch 1, dadurch gekennzeichnet, dass man textile Fasermaterialien mit Farbstoffmischungen, enthaltend die in Anspruch 1 angegebene Mischung sowie weitere Farbstoffe oder Farbstoffmischungen, färbt oder bedruckt.

8. Verfahren gemäss Anspruch 1, dadurch gekennzeichnet, dass man in Gegenwart von Wasserdampf oder Heissluft unter Normaldruck bei einer Temperatur zwischen 90 °C und 220 °C fixiert.

9. Farbstoffmischung enthaltend

A) den 1 : 2-Chrom-und 1 : 2-Kobaltkomplex des Azofarbstoffes der Formel

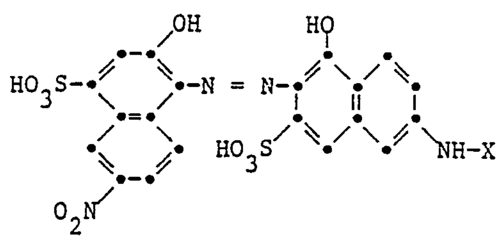

(1)

und den 1 : 2-Chrom- und 1 : 2-Kobaltkomplex des Azofarbstoffes der Formel

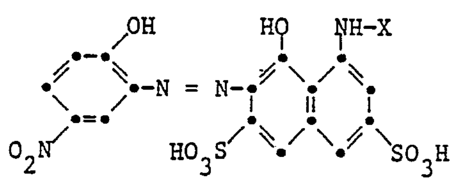

(2)

worin X in den Formeln (1) und (2) einen faserreaktiven Rest bedeutet, oder

B) den 1 : 2-Kobaltkomplex des Azofarbstoffes der Formel (1) und den 1 : 2-Chromkomplex des Azofarbstoffes der Formel (2).

10. Farbstoffmischung gemäss Anspruch 9, enthaltend den 1 : 2-Chromkomplex des Azofarbstoffes der Formel (2) und den 1 : 2-Kobaltkomplex des Azofarbstoffes der Formel (1).

11. Farbstoffmischung gemäss Anspruch 9, enthaltend den 1 : 2-Chrom- und 1 : 2-Kobaltkomplex des Azofarbstoffes der Formel

(Siehe Formel Seite 14 f.)

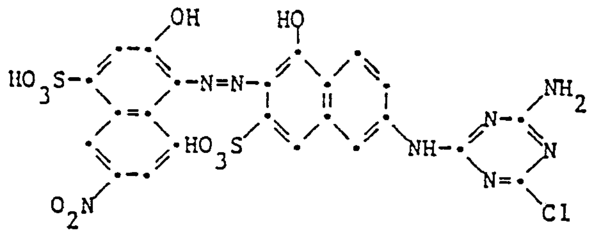

(3)

und den 1 : 2-Chrom- und 1 : 2-Kobaltkomplex des Azofarbstoffes der Formel

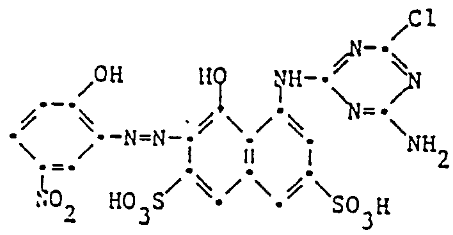

(4)

12. Farbstoffmischung gemäss Anspruch 10, enthaltend den 1 : 2-Chromkomplex des Azofarbstoffes der Formel

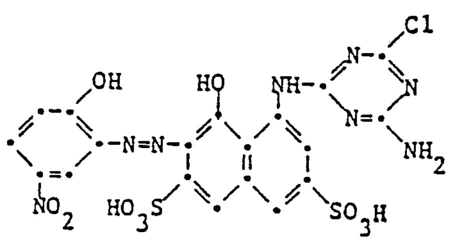

(4)

und den 1 : 2-Kobaltkomplex des Azofarbstoffes der Formel

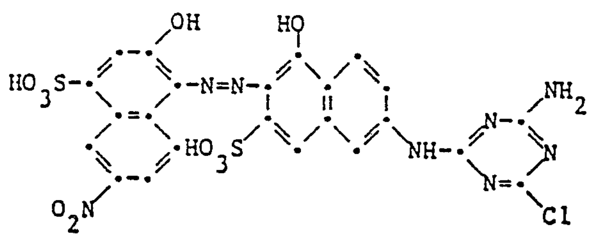

(3)

## Claims

1. A process for dyeing or printing textile fibre materials in stable shades with grey or black reactive dyes, which comprises dyeing or printing textile fibre materials

A) with a mixture of the 1 : 2-chromium and 1 : 2-cobalt complexes of the azo dye of the formula

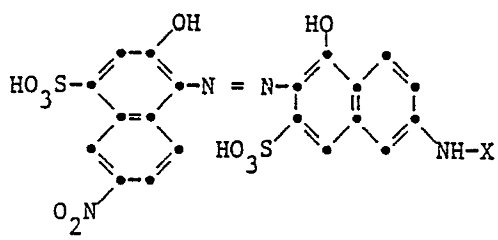

(1)

and with a mixture of the 1 : 2-chromium and 1 : 2-cobalt complexes of the azo dye of the formula

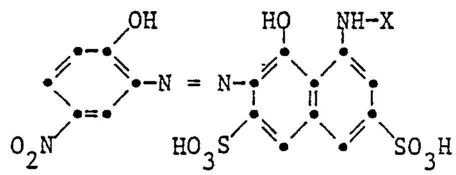

(2)

in which X in the formulae (1) and (2) is a fibre-reactive radical, or

B) with the 1 : 2-cobalt complex of the azo dye of the formula (1) and the 1 : 2-chromium complex of the azo dye of the formula (2), and carrying out subsequent fixation.

2. A process according to claim 1, which comprises using the 1 : 2-chromium and 1 : 2-cobalt complex of the azo dye of the formula (1) as one mixture component and the 1 : 2-chromium and 1 : 2-cobalt complex of the azo dye of the formula (2) as the other mixture component.

3. A process according to claim 1, which comprises using the 1 : 2-chromium complex of the azo dye of the formula (2) as one mixture component and the 1 : 2-cobalt complex of the azo dye of the formula (1) as the other mixture component.

4. A Process according to claim 2, which comprises using the 1 : 2-chromium and 1 : 2-cobalt complex of the azo dye of the formula

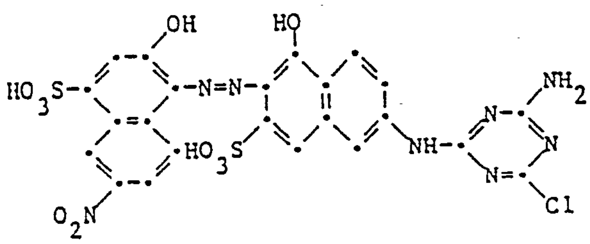

(3)

as one mixture component and the 1 : 2-chromium and 1 : 2-cobalt complex of the azo dye of the formula

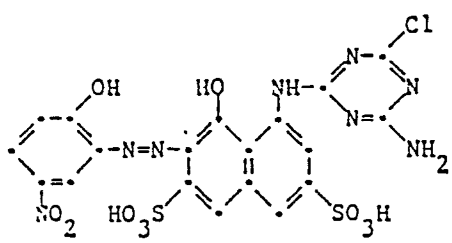

(4)

as the other mixture component.

5. A process according to claim 3, which comprises using the 1 : 2-chromium complex of the azo dye of the formula

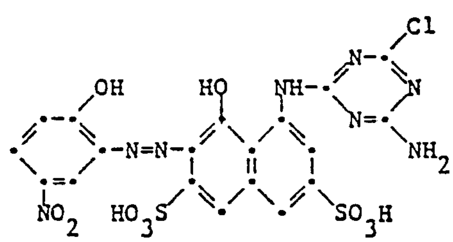

(4)

as one mixture component and the 1 : 2-cobalt complex of the azo dye of the formula

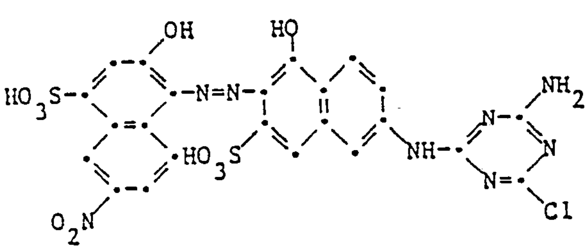

(3)

as the other mixture component.

6. A process according to claim 1, which comprises printing textile fibre materials with the mixture indicated in claim 1.

7. A process according to claim 1, which comprises dyeing or printing textile fibre materials with a dye mixture containing the mixture indicated in claim 1 and further dyes or dye mixtures.

8. A process according to claim 1, which comprises carrying out the fixation in the presence of water vapour or hot air under normal pressure at a temperature between 90 °C and 220 °C.

9. A dye mixture containing

A) The 1 : 2-chromium and 1 : 2-cobalt complex of the azo dye of the formula

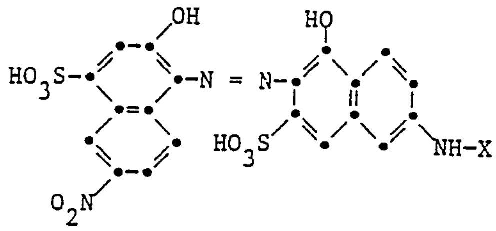

(1)

and the 1 : 2-chromium and 1 : 2-cobalt complex of the azo dye of the formula

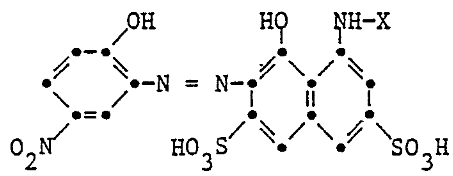

(2)

in which X in the formulae (1) and (2) is a fibre-reactive radical, or

B) the 1 : 2-cobalt complex of the azo dye of the formula (1) and the 1 : 2-chromium complex of the azo dye of the formula (2).

10. A dye mixture according to claim 9, containing the 1 : 2-chromium complex of the azo dye of the formula (2) and the 1 : 2-cobalt complex of the azo dye of the formula (1).

11. A dye mixture according to claim 9, containing the 1 : 2-chromium and 1 : 2-cobalt complex of the azo dye of the formula

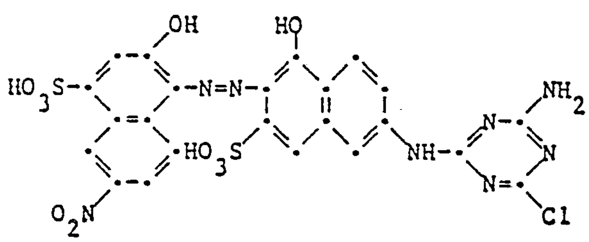

(3)

and the 1 : 2-chromium and 1 : 2-cobalt complex of the azo dye of the formula

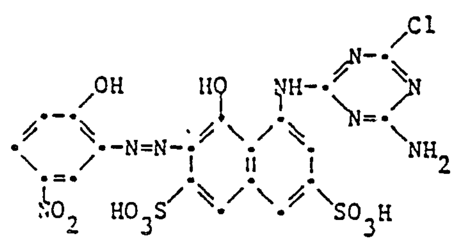

(4)

12. A dye mixture according to claim 10, containing the 1 : 2-chromium complex of the azo dye of the formula

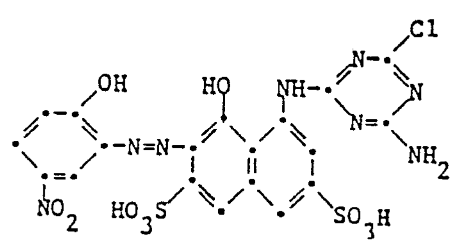

(4)

and the 1 : 2-cobalt complex of the azo dye of the formula

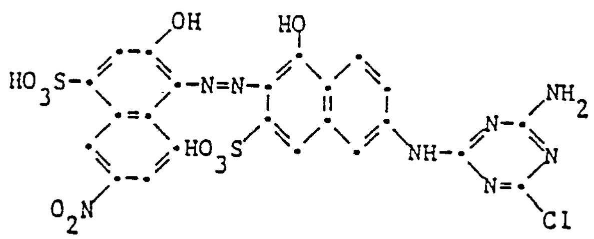

(3)

## Revendications

1. Procédé pour teindre ou imprimer, avec une nuance stable, des matières en fibres textiles avec des colorants réactifs teignant en gris ou en noir, caractérisé en ce que l'on teint ou imprime les matières en fibres textiles

A) avec un mélange des complexes du chrome 1 : 2 et du cobalt 1 : 2 du colorant azoïque de formule

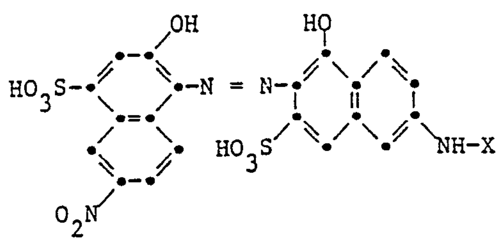

(1)

et avec un mélange des complexes du chrome 1 : 2 et du cobalt 1 : 2 du colorant azoïque de formule

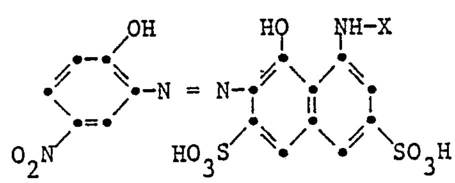

(2)

X représentant dans les formules (1) et (2) un reste réactif sur les fibres, ou

B) avec le complexe du cobalt 1 : 2 du colorant azoïque de formule (1) et le complexe du chrome 1 : 2 du colorant azoïque de formule (2), et effectue ensuite le fixage.

2. Procédé selon la revendication 1, caractérisé en ce que l'on emploie, en tant que l'un des constituants du mélange, le complexe du chrome 1 : 2 et le complexe du cobalt 1 : 2 du colorant azoïque de formule (1) et, en tant que l'autre constituant du mélange, le complexe du chrome 1 : 2 et le complexe du cobalt 1 : 2 du colorant azoïque de formule (2).

3. Procédé selon la revendication 1, caractérisé en ce que l'on emploie, en tant que l'un des constituants du mélange, le complexe du chrome 1 : 2 du colorant azoïque de formule (2) et, en tant que l'autre constituant du mélange, le complexe au cobalt 1 : 2 du colorant azoïque de formule (1).

4. Procédé selon la revendication 2, caractérisé en ce que l'on emploie, en tant que l'un des constituants du mélange, le complexe du chrome 1 : 2 et le complexe du cobalt 1 : 2 du colorant azoïque de formule

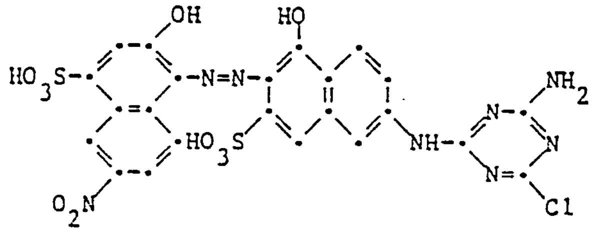

(3)

et, en tant que l'autre constituant du mélange, le complexe du chrome 1 : 2 et le complexe du cobalt 1 : 2 du colorant azoïque de formule

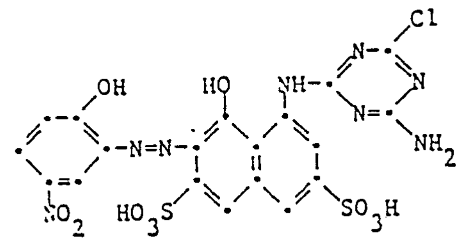

(4)

5. Procédé selon la revendication 3, caractérisé en ce que l'on emploie, en tant que l'un des constituants du mélange, le complexe du chrome 1 : 2 du colorant azoïque de formule

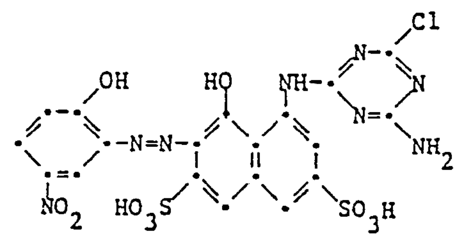

(4)

et, en tant que l'autre constituant du mélange, le complexe du cobalt 1 : 2 du colorant azoïque de formule

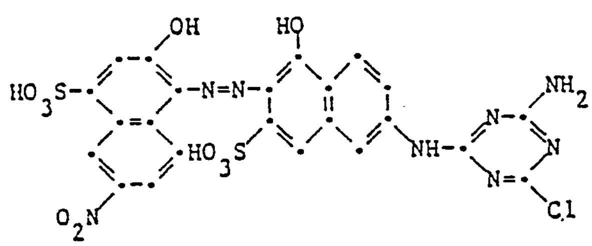

(3)

6. Procédé selon la revendication 1, caractérisé en ce que l'on imprime les matières en fibres textiles avec le mélange indiqué à la revendication 1.

7. Procédé selon la revendication 1, caractérisé en ce que l'on teint ou imprime les matières en fibres textiles avec des mélanges de colorants contenant le mélange indiqué à la revendication 1 ainsi que d'autres colorants ou mélanges de colorants.

8. Procédé selon la revendication 1, caractérisé en ce que l'on effectue le fixage à une température comprise entre 90 °C et 220 °C, en présence de vapeur d'eau ou d'air chaud, sous la pression normale.

9. Mélange de colorants contenant :

A) le complexe du chrome 1 : 2 et le complexe du cobalt 1 : 2 du colorant azoïque de formule

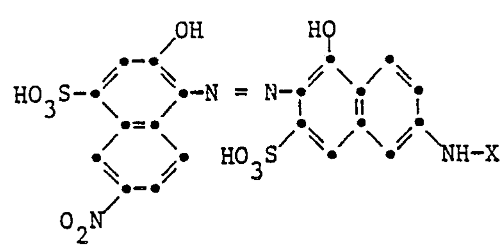

(1)

et le complexe du chrome 1 : 2 et le complexe du cobalt 1 : 2 du colorant azoïque de formule

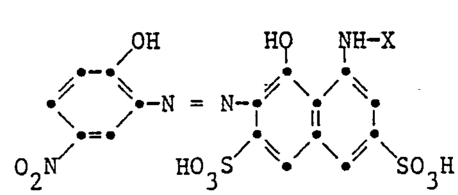

(2)

X représentant dans les formules (1) et (2) un reste réactif sur les fibres ou

B) le complexe du cobalt 1 : 2 du colorant azoïque de formule (1) et le complexe du chrome 1 : 2 du colorant azoïque de formule (2).

10. Mélange de colorants selon la revendication 9, contenant le complexe du chrome 1 : 2 du colorant azoïque de formule (2) et le complexe du cobalt 1 : 2 du colorant azoïque de formule (1).

11. Mélange de colorants selon la revendication 9, contenant le complexe du chrome 1 : 2 et le complexe du cobalt 1 : 2 du colorant azoïque de formule

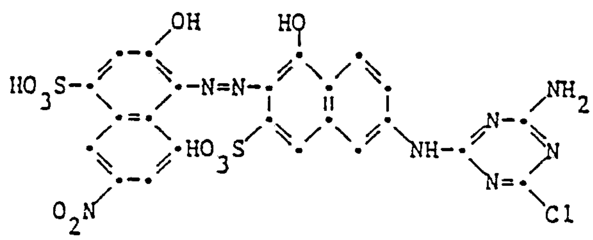

(3)

et le complexe du chrome 1 : 2 et le complexe du cobalt 1 : 2 du colorant azoïque de formule

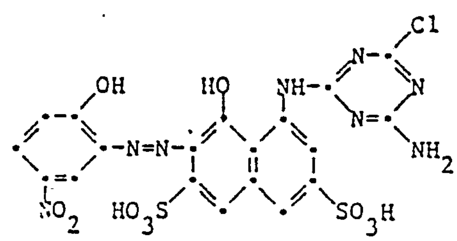

(4)

12. Mélange de colorants selon la revendication 10, contenant le complexe du chrome 1 : 2 du colorant azoïque de formule

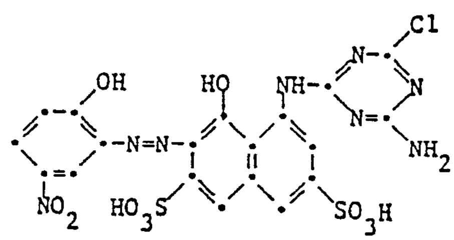

(4)

et le complexe du cobalt 1 : 2 du colorant azoïque de formule

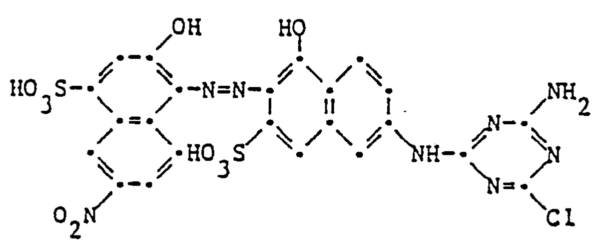

(3)